# EUROPÄISCHE PATENTSCHRIFT

(11) **EP 0 442 128 B1**
(45) Veröffentlichungstag und Bekanntmachung des Hinweises auf die Patenterteilung: **09.07.1997**
(21) Anmeldenummer: 90125212.2
(22) Anmeldetag: 21.12.1990
(51) Int. Cl.: B29C 45/14

(54) **Verfahren zum Herstellen von Mehrschichtformkörpern**
Method for producing multilayered moulded bodies
Procédé pour fabriquer des corps moulés à plusieurs couches

(30) Priorität: 10.02.1990 DE 4004029
(43) Veröffentlichungstag der Anmeldung: 21.08.1991
(73) Patentinhaber: BAYER AG, 51368 Leverkusen (DE)
(72) Erfinder: Waldenrath, Werner, Dipl.-Ing., W-5000 Köln 1 (DE); Wank, Joachim, Dipl.-Ing., W-4047 Dormagen 5 (DE); Lamaack, Wolfgang, Dipl.-Ing., W-4048 Grevenbroich (DE); Benner, Dietmar, Dipl.-Ing., Coropolis, Pennsylvania 15108 (DE); Johannaber, Friedrich, Dr., W-5204 Lohmar 1 (DE); Jülicher, Karl-Heinz, W-5000 Köln 80 (DE)

(56) Entgegenhaltungen:
- EP-A- 0 101 095
- CH-A- 472 960
- FR-A- 2 459 116
- US-A- 4 781 554
- PATENT ABSTRACTS OF JAPAN vol. 7, no. 141 (M-223)(1286) 21. Juni 1983 & JP-A-58 053 428 ( AKINOBU TATEBAYASHI )

## Beschreibung

Die Erfindung betrifft ein Verfahren zum Herstellen von Mehrschichtformkörpern aus einer verformbaren Folie und einem thermoplastischen oder duroplastischen Harz, wobei die Folie in der Kavität eines Formwerkzeuges mittels eines fluiden Mediums unter einem Druck von mindestens 20 bar verformt wird und mit dem Harz hinterspritzt wird.

Dieses Verfahren ist aus DE 38 40 542 C1 bekannt. Hier handelt es sich insbesondere um eine bedruckte Kunststoffolie, z.B. Polycarbonatfolie, wobei der Aufdruck vor der Verformung aufgebracht wird und nach der Verformung exakt plaziert sein soll. Das Hinterspritzen der verformten Folie dient deren höheren Stabilität. Dabei entsteht ein Mehrschichtformkörper. Das Verformen der Folie erfolgt in einem ersten Formwerkzeug, welches eine der gewünschten Geometrie der verformten Folie entsprechende Kavität aufweist. Das Hinterspritzen findet in einem zweiten, separaten, Spritzgießformwerkzeug statt.

Da zwei Formwerkzeuge benötigt werden, sind manuelle oder automatische Zwischenschritte zum Entnehmen der verformten Folie aus dem ersten Formwerkzeug und zum Transportieren und Einlegen in das zweite Formwerkzeug notwendig. Weil die verformte Folie relativ instabil ist, ist das Plazieren im zweiten Formwerkzeug sehr zeitraubend und durch Verrutschen der Folie entsteht immer wieder Ausschuß.

Die Französische Offenlegungsschrift FR 2 459 116 beschreibt ein Spritzgießverfahren und eine Vorrichtung zum Hinterspritzen von dekorierten Folien mit Hilfe eines einteiligen Formwerkzeuges, bei dem eine vorerhitzte, dekorierte Folie mittels Druckbeaufschlagung an die Kontur des Formwerkzeuges angelegt wird und anschließend hinterspritzt wird. Die bei diesem Verfahren warmverformte Folie ist mit einer Lage Entformungsmittel versehen und dient lediglich der Übertragung eines Druckmusters auf das Spitzgußteil. Die Folie wird entfernt, sobald das Formteil aus der Form genommen wird. Besondere Maßnahmen, durch die ein grafisch empfindliches Dekor bei dieser Art der Warmverformung geschützt werden kann, werden in dieser Offenlegungsschrift nicht offenbart.

Es besteht die Aufgabe, ausgehend von den beschriebenen Verfahren, die Herstellung von Mehrschichtformkörpern zu vereinfachen und die Ausschußquote zu senken. Weiterhin besteht die Aufgabe, die kaltverformten Folien in der Spritzgußform zu halten und zu positionieren sowie ein Verziehen und Schrumpfen der Folie oder eine Faltenbildung durch geeignete Druckführung zu verhindern.

Dies wird dadurch erreicht, daß die Verformung der Folie in der Kavität eines Spritzgießformwerkzeuges durchgeführt wird, daß die Folie direkt anschließend in dieser Kavität hinterspritzt wird, wobei während des Hinterspritzens ein die verformte Folie in Position haltender Druck aufrechterhalten wird, und wobei der durch den Spritzvorgang ansteigende Druck kontrolliert abgebaut wird.

Durch die Verwendung desselben Spritzgießformwerkzeuges sowohl für die Verformung der Folie als auch für deren Hinterspritzen mit einem Harz verringert sich der maschinelle und manuelle Aufwand erheblich und die Ausschußquote verringert sich. Als Druckmedien eignen sich flüssige oder gasförmige, wobei den gasförmigen, wie Druckluft oder Inertgase, wie Stickstoff, Helium, Argon, der Vorzug zu geben ist. Als Folienmaterial eignet sich besonders gut Polycarbonat. Weitere geeignete Kunststofffolien bzw. Folienwerkstoffe sind in DE 38 40 542 C1 beschrieben. Aber auch hochstreckfähige metallische Folien sind geeignet.

Für das neue Verfahren ist es ohne Belang, ob die Folien bedruckt oder unbedruckt sind. Als Thermoplaste und Duroplaste für das Hinterspritzen kommen alle solchen in Frage, welche spritzgießfähig sind und welche den vom Endprodukt geforderten Eigenschaften entsprechen. Die Verformung der Folie durch das Druckmedium findet sehr schnell statt, so daß man von einer schlagartigen Verformung sprechen kann, insbesondere, wenn man höhere Drücke anwendet. Der beim Spritzgießen in der Kavität herrschende Druck kann niedriger oder höher sein als der für die Verformung der Folie benötigte Druck, sofern er nur ausreichend ist, die verformte Folie bis zum Spritzgießen und während des Spritzgießens in Position zu halten. Da die verformte Folie durch diesen Druck an der Wandung der Kavität haften bleibt, kann beim Hinterspritzen auch keine Spritzgießmasse zwischen die Folie und die Wandung der Kavität eindringen und durch die exakte Plazierung der Folie kann auch kein Ausschuß entstehen, wie er bei schlecht oder falsch plazierter Folie auftritt.

Der kontrollierte Abbau des Drucks erfolgt beispielsweise durch eine auf das Spritzgießformwerkzeug definiert aufgebrachte Schließkraft, so daß überschüssiges Druckmedium durch den Spalt zwischen den Formwerkzeughälften in dem Maße entweichen kann, wie es durch die eingespritzte Kunststoffmasse verdrängt wird. Alternativ und noch besser steuerbar ist eine Druckentlastung durch ein Überdruckventil in einer mit der Kavität verbundenen Entlüftungsleitung.

Gemäß einer besonderen Durchführungsform des neuen Verfahrens wird das Druckmedium durch die Einspritzdüse einer dem Spritzgießformwerkzeug zugeordneten Spritzgießeinheit eingeführt.

Dies hat den Vorteil, daß in der Kavität keine zusätzliche Öffnung vorhanden sein muß. Das fluide Druckmedium strömt dabei beispielsweise über einen Stichkanal, welcher mittels eines Schiebers oder Kolbens absperrbar ist, in den Düsenkanal.

Alternativ wird das fluide Medium durch einen besonderen, gegen Eindringen von Harz abdichtbaren Zuführkanal eingebracht.

Hier ist zwar der Nachteil einer zweiten Öffnung in der Kavität in Kauf zu nehmen, aber andererseits kann man die Mündung dieses Kanals in der Kavität an eine geeignete Stelle legen, so daß Einschlüsse von Druckmedium beim Hinterspritzen mit Sicherheit ausgeschlossen werden.

Schließlich ist es auch möglich, das Druckmedium durch einen zwischen der Einspritzdüse und deren Ansatztrichter am Spritzgießformwerkzeug belassenen Ringspalt einzuführen und die Einspritzdüse erst nach dem Einbringen des Druckmediums abdichtend an diesen Ansatztrichter anzusetzen, um dann die Kunststoffmasse einzuspritzen.

In der Zeichnung sind drei geeignete Spritgießformwerkzeuge den einzelnen Verfahrensschritten entsprechend im Schnitt dargestellt und nachstehend näher erläutert.

Es zeigen:
- Fig. 1 bis 5: den Verfahrensablauf in einem ersten Spritzgießformwerkzeug,
- Fig. 6 bis 10: den Verfahrensablauf in einem zweiten Spritzgießformwerkzeug und
- Fig. 11 bis 15: den Verfahrensablauf in einem dritten Spritzgießformwerkzeug.

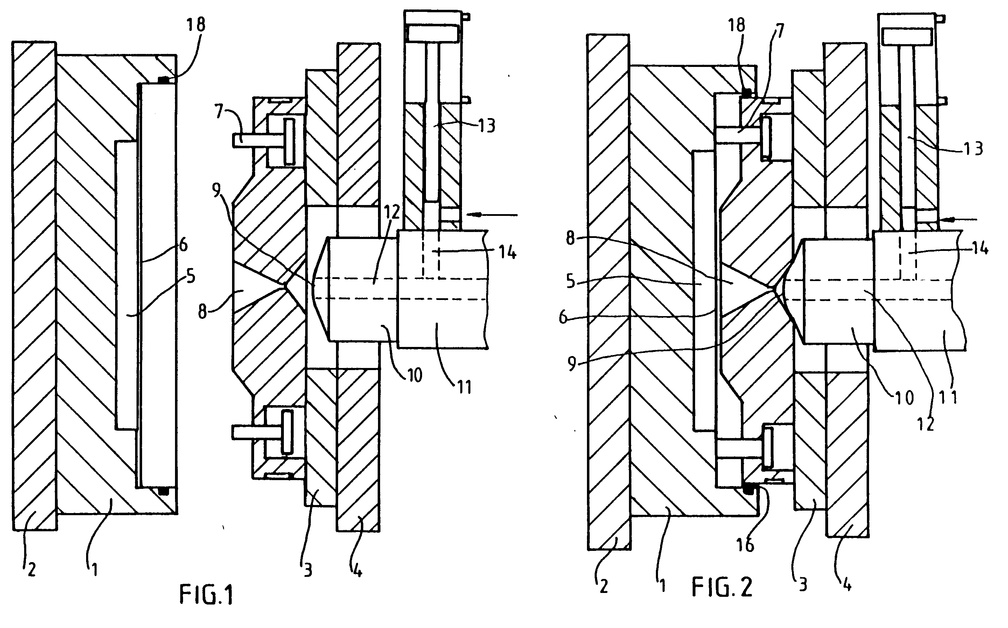

In Fig. 1 bis 5 sind eine erste Formhälfte 1 eines Spritzgießformwerkzeuges auf einer ersten Aufspannplatte 2 und eine zweite Formhälfte 3 auf einer zweiten Aufspannplatte 4 angeordnet. Die Formhälfte 1 weist eine Kavität 5 auf, über welche eine zu verformende Folie 6 (Fig. 1) gelegt ist. Die Formhälfte 3 ist mit Niederhaltern 7 versehen. Sie weist außerdem einen Einspritzkanal 8 auf, welcher über eine Düsenöffnung 9 einer Einspritzdüse 10 mit einer angedeuteten Spritzgießeinheit 11 in Verbindung steht. Diese Einspritzdüse 10 weist einen Kanal 12 auf, in welchen ein mittels eines Verschlußkolbens 13 absperrbarer Zuführkanal 14 für ein gasförmiges Druckmedium mündet. Der Kanal 12 ist mit dem nicht dargestellten Schmelzeraum einer Spritzgießeinheit 11 verbunden.

In Fig. 2 sind die Formhälften 1 und 3 zusammengefahren, die Formhälfte 3 hält mit ihren Niederhaltern 7 die Folie 6 in Position und die Einspritzdüse 10 ist angesetzt. In dieser Stellung dichtet die Dichtung 18 die Kavität 5 ab.

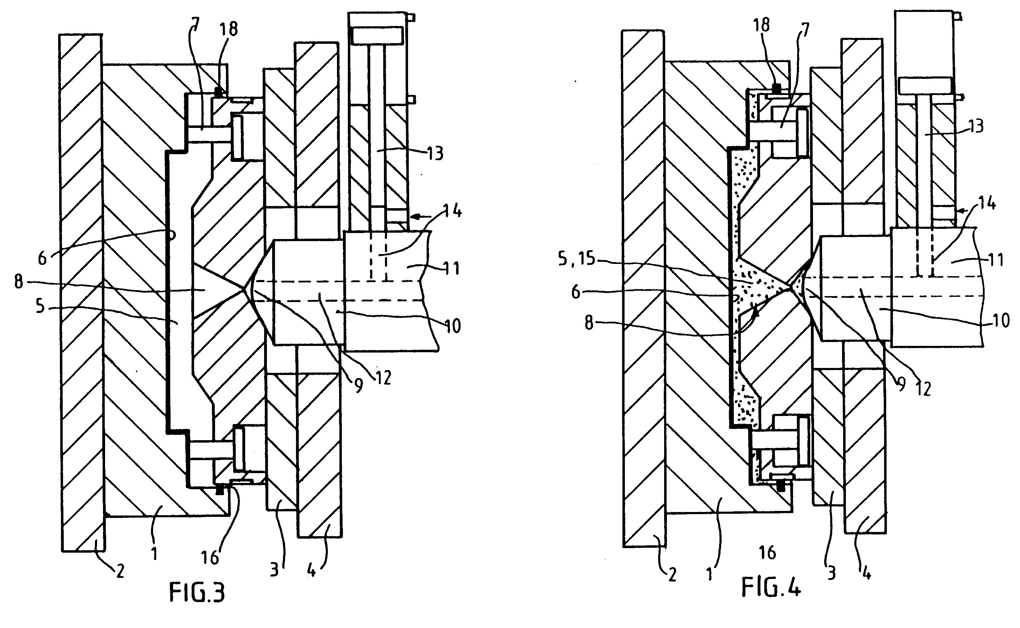

Sodann wird über den Zuführkanal 14 und die Düsenöffnung 9 Druckluft von 50 bar eingeleitet, wodurch sich die Folie 6 schlagartig verformt und die gewünschte Geometrie der Kavität 5 annimmt, wie in Fig. 3 dargestellt. Die Luft hinter der Folie 6 wird durch nicht dargestellte geeignete Entlüftungskanäle oder durch Sintereinsätze herausgepreßt.

Direkt anschließend wird mittels der Spritzgießeinheit 11 eine fließfähige thermoplastische Masse 15 (thermoplastisches Polyurethan) eingespritzt, wobei der dabei weiter aufbauende Druck durch Entweichen des Druckmediums durch den Formspalt 16 zwischen den beiden Formhälften 1 und 3 abgebaut wird.

In Figur 4 ist das Spritzgießformwerkzeug mit gefüllter Kavität 5 dargestellt.

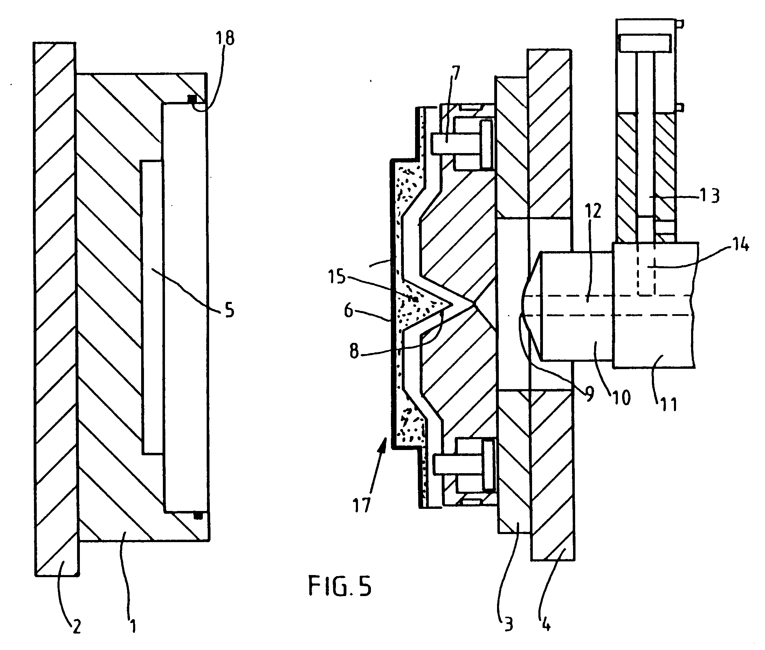

In Fig. 5 schließlich ist das zum Entnehmen des Mehrschichtformkörpers 17 geöffnete Formwerkzeug gezeigt.

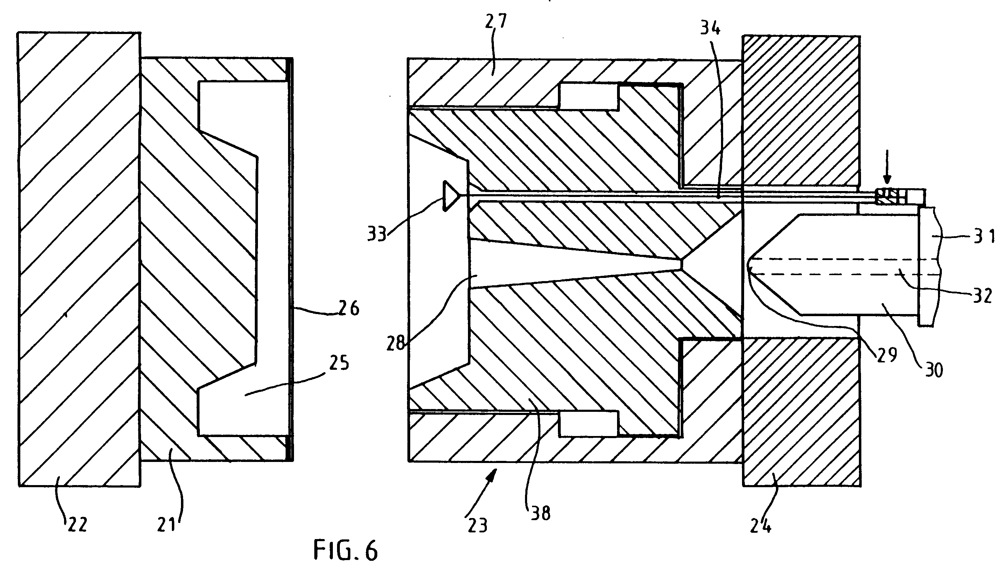

In Fig. 6 bis 11 sind eine erste Formhälfte 21 eines Spritzgießformwerkzeuges auf einer ersten Aufspannplatte 22 und eine zweite Formhälfte 23 auf einer zweiten Aufspannplatte 24 angeordnet. Die Formhälfte 21 weist eine Kavität 25 auf, über welche eine zu verformende Folie 26 gelegt ist. Die obere Formhälfte 23 ist mit einem ringförmigen Niederhalter 27 versehen, in welchem ein verschiebbarer Kern 38 angeordnet ist. Dieser Kern 38 weist einen Einspritzkanal 28 auf, welcher über eine Düsenöffnung 29 einer Einspritzdüse 30 mit einer angedeuteten Spritzgießeinheit 31 in Verbindung steht. Diese Einspritzdüse 30 weist einen Kanal 32 auf, welcher mit dem nicht dargestellten Schmelzeraum der Spritzgießeinheit 31 verbunden ist. Ein gesonderter Zuführkanal 34 für Druckluft ist mittels eines Verschlußkolbens 33 absperrbar.

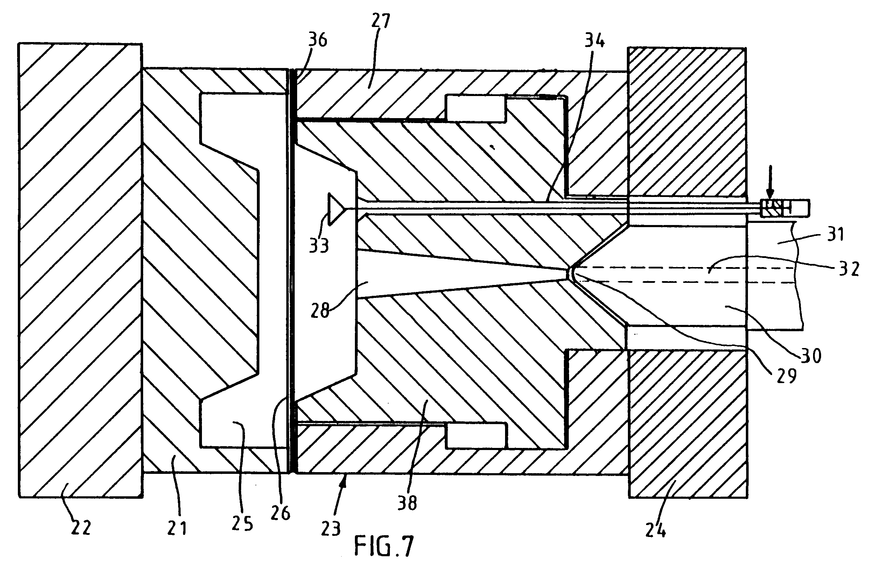

In Fig. 7 sind die Formhälften 21 und 23 zusammengefahren, der Niederhalter 27 hält die Folie 26 in Position und die Einspritzdüse 30 ist angesetzt.

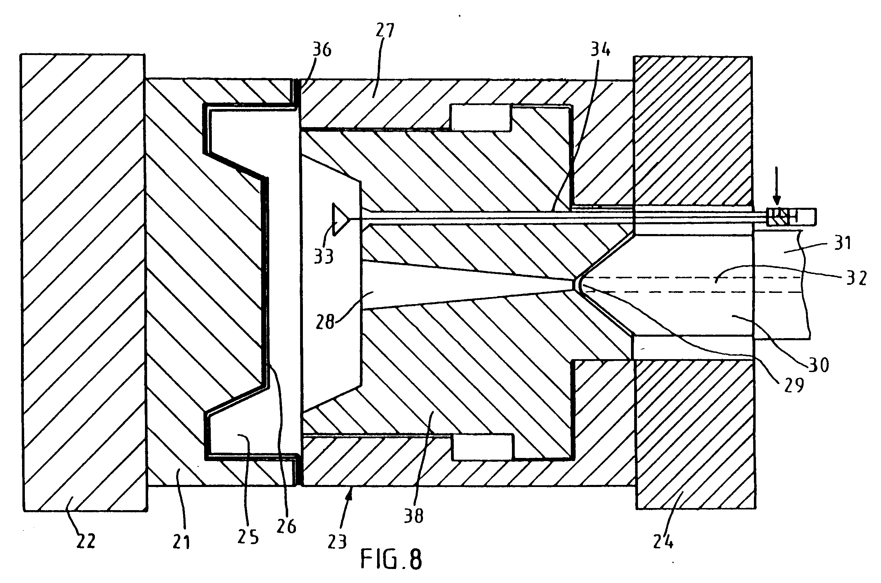

Dann wird über den Zuführkanal 34 Druckluft von 300 bar eingeleitet, wodurch sich die Folie 26 schlagartig verformt und die gewünschte Geometrie der Kavität 25 annimmt, wie in Fig. 8 dargestellt. Die Luft hinter der Folie wird durch nicht dargestellte geeignete Entlüftungskanäle oder Sintereinsätze herausgepreßt.

Direkt anschließend wird der Zuführkanal 34 mittels des Verschlußkolbens 33 verschlossen und mittels der Spritzgießeinheit 31 wird eine duroplastische Masse 35 in die Kavität 25 eingespritzt. Dabei wird der Druck in der Kavität 25 kontrolliert, der durch die Formzuhaltekraft und den Einspritzdruck bestimmt wird.

Als Druckmedium wird hier Stickstoff verwendet, welcher nach und nach von der duroplastischen Masse 35 völlig verdrängt wird.

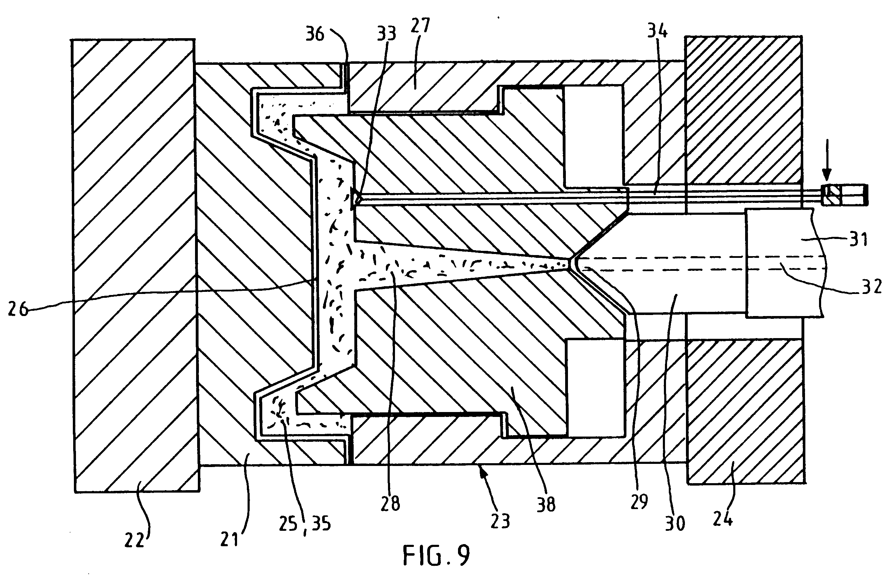

Das Spritzgießformwerkzeug ist mit gefüllter Kavität aus Fig. 9 ersichtlich.

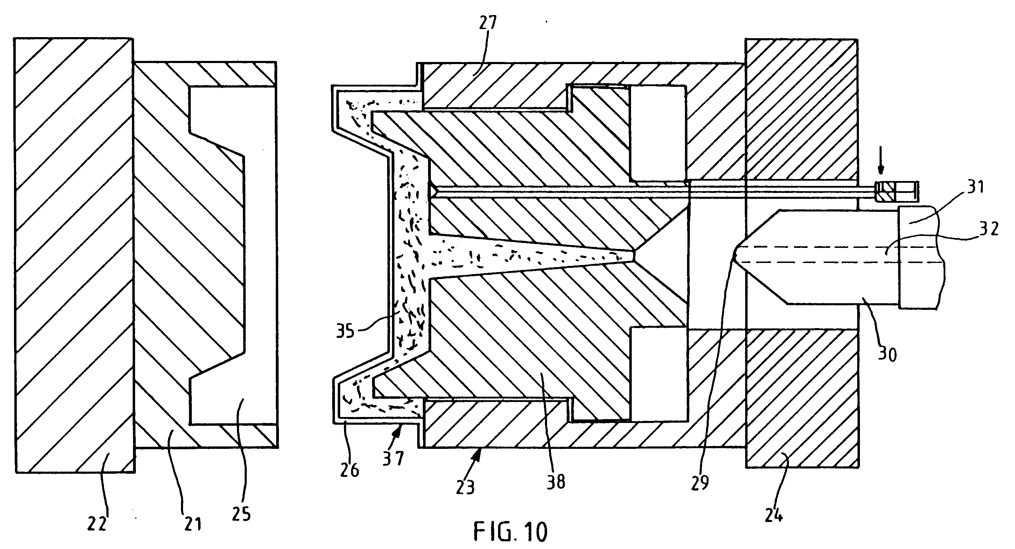

In Fig. 10 schließlich ist das zum Entnehmen des fertigen Mehrschichtformkörpers 37 geöffnete Formwerkzeug dargestellt.

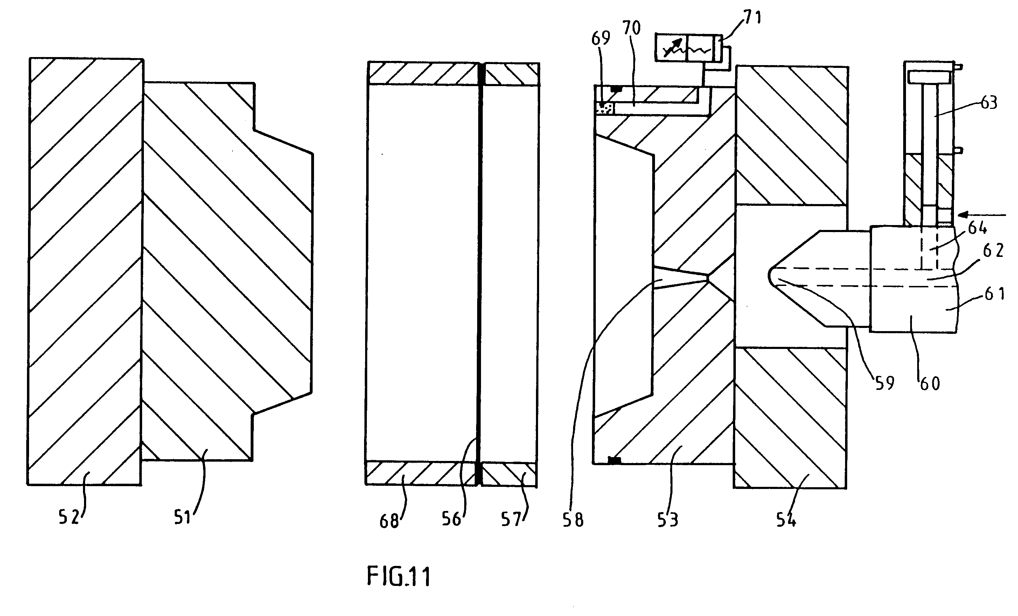

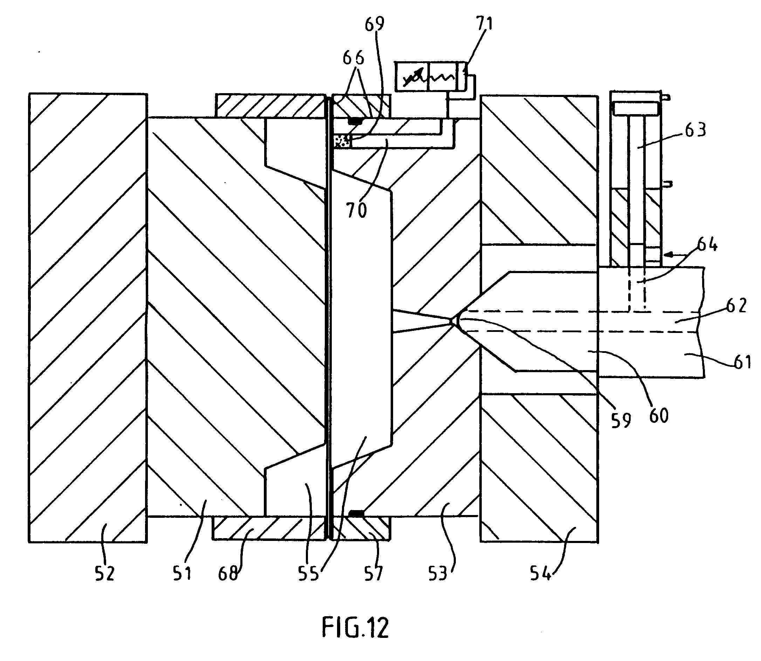

In Fig. 11 bis 15 sind eine Formhälfte 51 eines Spritzgießformwerkzeuges auf einer Aufspannplatte 52 und eine zweite Formhälfte 53 auf einer zweiten Aufspannplatte 54 angeordnet. Die Formhälfte 51 bildet zusammen mit einem Spannrahmenteil 68 eine Kavität 55 (Fig. 12). Zwischen diesem Spannrahmenteil 68 und einem Spannrahmenteil 57 ist eine Folie 56 eingespannt. Die Formhälfte 53 weist einen Anspritzkanal 58 auf, welcher über eine Düsenöffnung 59 eine Einspritzdüse 60 mit einer angedeuteten Spritzgießeinheit 61 in Verbindung steht. Diese Einspritzdüse 60 weist einen Kanal 62 auf, in welchen über ein mittels eines Verschlußkolbens 63 absperrbarer Zuführkanal 64 für ein gasförmiges Druckmedium mündet.

Der Kanal 62 ist mit dem nicht dargestellten Schmelzeraum einer angedeuteten Spritzgießeinheit 61 verbunden.

In Fig. 12 ist das Spritzgießformwerkzeug geschlossen dargestellt. Die Folie 55 wird durch den Spannrahmenteil 57 in Position gehalten.

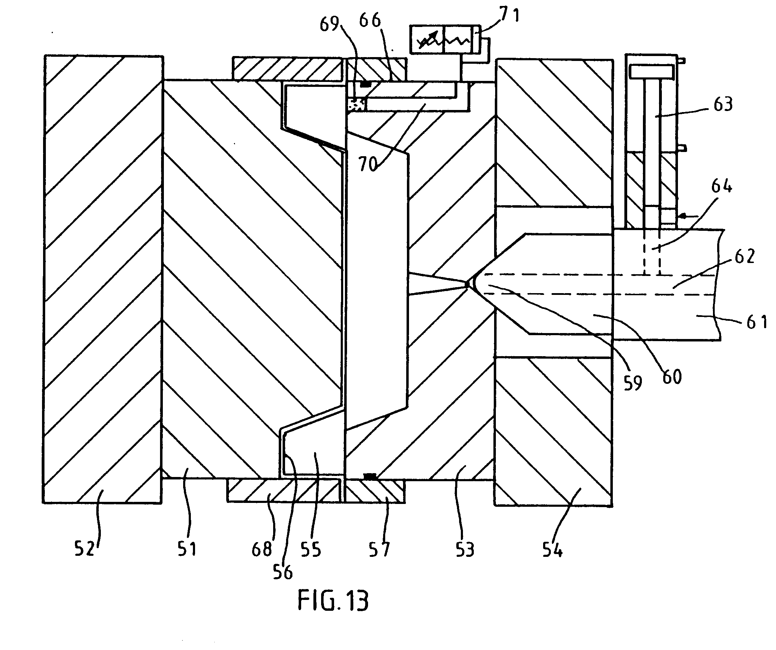

Sodann wird über den Zuführkanal 64 und die Düsenöffnung 59 Stickstoff von 200 bar eingeleitet, wodurch sich die Folie 56 schlagartig verformt und die gewünschte Geometrie der Kavität 55 annimmt, wie in Fig. 13 dargestellt. Die Luft hinter der Folie 56 entweicht durch den Spalt zwischen der Formhälfte 51 und dem Spannrahmenteil 68.

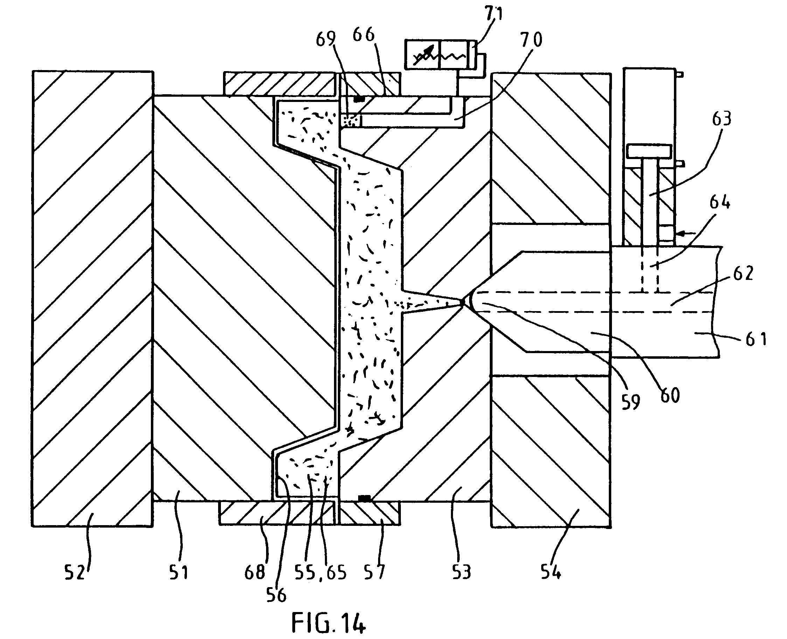

Direkt anschließend wird mittels der Spritzgießeinheit 61 eine fließfähige thermoplastische Masse 65 durch den Kanal 62 in die Kavität 55 eingespritzt, wobei der Druck durch einen Sintereinsatz 69, einen Kanal 70 und ein Druckhalteventil 71 konstant gehalten wird. Das Spritzgießformwerkzeug ist mit gefüllter Kavität 55 in Fig. 14 dargestellt.

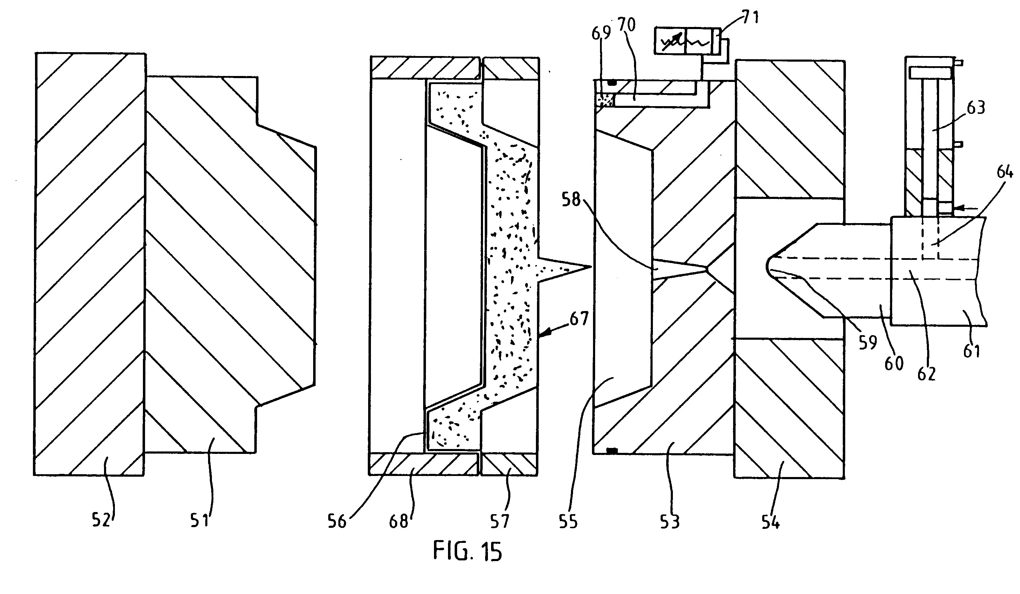

In Fig. 15 schließlich ist das zum Entnehmen des Mehrschichtformkörpers 67 geöffnete Spritzgießformwerkzeug gezeigt. Nach Auseinandernehmen der Spannrahmenteile 57 und 68 läßt sich der gebildete Mehrschichtformkörper 67 entnehmen.

## Patentansprüche

1. Verfahren zum Herstellen von Mehrschichtformkörpern (17, 37, 67) aus einer Folie (6, 26, 56) und einem thermoplastischen oder duroplastischen Harz (15, 35, 65), wobei die Folie (6, 26, 56) in der Kavität (5, 25, 55) eines Formwerkzeuges mittels eines fluiden Mediums unter einem Druck von mindestens 20 bar und einer Arbeitstemperatur des Folienmaterials unterhalb der Erweichungstemperatur des Folienmaterials verformt und anschließend mit dem Harz (15, 35, 65) hinterspritzt wird, dadurch gekennzeichnet, daß die Verformung der Folie (6, 26, 56) in der Kavität (5, 25, 55) eines Spritzgieß-Formwerkzeuges durchgeführt wird und daß die Folie (6, 26, 56) direkt anschließend in dieser Kavität (5, 25, 55) hinterspritzt wird und daß während des Hinterspritzens der zur Verformung der Folie (6, 26, 56) aufgebrachte Druck aufrechterhalten wird, wobei der beim Hinterspritzen ansteigende Druck kontrolliert und abgebaut wird.

2. Verfahren nach Anspruch 1, dadurch gekennzeichnet, daß das fluide Medium durch die Einspritzdüse (10, 60) einer dem Spritzgießformwerkzeug zugeordneten Spritzgießeinheit (11, 61) zugeführt wird.

3. Verfahren nach Anspruch 1 oder 2, dadurch gekennzeichnet, daß das fluide Medium durch einen besonderen, gegen Eindringen von Harz abdichtbaren Zuführkanal (34) eingebracht wird.

## Claims

1. Process for manufacturing laminated moulded bodies (17, 37, 67) from a foil (6, 26, 56) and a thermoplastic or thermosetting resin (15, 35, 65) whereby the foil (6, 26, 56) is deformed within the cavity (5, 25, 55) of a moulding tool with the aid of a fluid medium subject to a pressure of at least 20 bar and at a working temperature of the foil material lower than the softening temperature of the foil material whereupon resin (15, 35, 65) is sprayed on the reverse side of said foil, characterised in that the deformation of the foil (6, 26, 56) is effected within the cavity (5, 25, 55) of an injection-moulding tool, in that the foil (6, 26, 56) is immediately afterwards sprayed on its reverse side within said cavity (5, 25, 55), and in that the pressure applied in order to deform the foil (6, 26, 56) is maintained in the course of spraying said foil on its reverse side, the pressure which increases in the course of spraying the reverse side being monitored and reduced.

2. Process according to Claim 1, characterised in that the fluid medium is supplied through the injection nozzle (10, 60) of an injection moulding unit (11, 61) associated with the injection-moulding tool.

3. Process according to Claim 1 or Claim 2, characterised in that the fluid medium is supplied through a special feed duct (34) capable of being sealed so as to prevent the penetration of resin.

## Revendications

1. Procédé pour fabriquer des corps moulés à plusieurs couches (17, 37, 67) partir d'une feuille (6, 26, 56) et d'une résine thermoplastique ou duroplastique (15, 35, 65), dans lequel la feuille (6, 26, 56) est déformée dans la cavité (5, 25, 55) d'un outil de moulage au moyen d'un milieu fluide sous une pression d'au moins 20 bars et une température de travail du matériau en feuille inférieure à la température de ramollissement du matériau en feuille, et elle est ensuite injectée au verso avec la résine (15, 35, 65), caractérisé en ce que la déformation de la feuille (6, 26, 56) est effectuée dans la cavité (5, 25, 55) d'un outil de moulage par injection, et en ce que directement à la suite de ceci la feuille (6, 26, 56) est injectée au verso dans cette cavité (5, 25, 55), et, pendant l'injection au verso on maintient la pression appliquée pour la déformation de la feuille (6, 26, 56), et la pression croissante lors de l'injection au verso est contrôlée et réduite.

2. Procédé selon la revendication 1, caractérisé en ce que le milieu fluide est admis via la buse d'injection (10, 60) d'une unité d'injection (11, 61) associée à l'outil de moulage par injection.

3. Procédé selon l'une ou l'autre des revendications 1 et 2, caractérisé en ce que le milieu fluide est amené via un canal d'admission (34) particulier, susceptible d'être étanché à l'encontre de la pénétration de la résine.
